# EUROPÄISCHE PATENTSCHRIFT

(11) **EP 2 044 398 B1**
(45) Veröffentlichungstag und Bekanntmachung des Hinweises auf die Patenterteilung: **09.09.2020**
(21) Anmeldenummer: 07765237.8
(22) Anmeldetag: 19.07.2007
(51) Int. Cl.: G01S 7/282, G01F 23/284, G01S 7/285, G01S 13/88

(54) **UNABHÄNGIGE REFERENZPULSERZEUGUNG IN EINEM FÜLLSTANDSRADAR**
INDEPENDENT REFERENCE PULSE GENERATION IN A RADAR LEVEL METER
GÉNÉRATION AUTONOME D'UNE IMPULSION DE RÉFÉRENCE DANS UN INDICATEUR DE NIVEAU PAR RADAR

(30) Priorität: 26.07.2006 DE 102006034554; 26.07.2006 US 833525 P
(43) Veröffentlichungstag der Anmeldung: 08.04.2009
(73) Patentinhaber: VEGA Grieshaber KG, 77709 Wolfach (DE)
(72) Erfinder: FEHRENBACH, Josef, 77716 Haslach (DE); SCHULTHEISS, Daniel, 78132 Hornberg (DE); MÜLLER, Christoph, 77728 Oppenau (DE); CORBE, Bernhard, 77746 Schutterwald (DE)
(74) Vertreter: Maiwald Patent- und Rechtsanwaltsgesellschaft mbH
(86) Internationale Anmeldenummer: PCT/EP2007/006450
(87) Internationale Veröffentlichungsnummer: WO 2008/012029

(56) Entgegenhaltungen:
- EP-A- 0 955 527
- EP-A- 1 562 051
- WO-A-2007/062806
- US-A- 5 675 259
- US-A- 5 898 308
- US-A1- 2005 264 441

## Beschreibung

Die vorliegende Erfindung betrifft die Füllstandmessung. Insbesondere betrifft die vorliegende Erfindung ein Mikrowellenmodul zur unabhängigen Referenzpulserzeugung für ein Füllstandmessgerät, ein Füllstandmessgerät zur Bestimmung eines Füllstands in einem Tank, die Verwendung eines derartigen Mikrowellenmoduls zur Füllstandmessung und ein Verfahren zur unabhängigen Referenzpulserzeugung.

Bei Füllstandmessgeräten nach dem Puls-Laufzeitverfahren wird eine intern in einem Mikrowellenmodul erzeugte Reflexion als Referenz für die Laufzeitmessung verwendet.

Die Stabilität dieser intern erzeugten Reflexion hinsichtlich Amplitude, Form und Ort ist ausschlaggebend für die Genauigkeit des Messgerätes, da jede Veränderung zu einem Verschieben der Referenz (Nullpunkt) führen kann.

Bei bisherigen Füllstandmessgeräten wird der Referenzpuls aus einer Mischung verschiedener Reflexionen gewonnen. Diese einzelnen Reflexionen entstehen beispielsweise durch die Antenneneinkopplung, die Steckverbindungen am Mikrowellenmodul, den Übergang von der Leiterplatte auf Koaxialleitungen oder Hohlleiter sowie durch Lecksignale in der Sende-/Empfangsweiche (z. B. im Richtkoppler oder im Zirkulator). Des weiteren kann sich die Form des Referenzpulses durch eine Überlagerung mit sehr großen Echos eines Füllgutes im Bereich der Antenne so weit verändern, dass Ungenauigkeiten auftreten.

Durch das Einfügen von Leitungen zwischen verschiedenen Schaltungsteilen, wobei die Leitungen eine Länge aufweisen, die mindestens dem Auflösungsvermögen des Füllstandradars entspricht, können unterschiedliche Reflexionen besser voneinander getrennt werden.

Um eine Beeinflussung durch Echos im Nahbereich zu reduzieren, kann eine Leitung mit der Länge eines Sendepulses (entspricht etwa dem Auflösungsvermögen des Sensors) zwischen die Sende-/Empfangsweiche und den Übergang von der Microstripleitung auf die Koaxialleitung eingesetzt werden. Ebenso kann ein Stück Koaxialleitung zwischen diesen Übergang und die Hohlleitereinkopplung eingesetzt werden.

Allerdings bleibt der Einfluss der restlichen Reflexionen auf den Referenzpuls dabei bestehen. Ändert sich z. B. die Isolation der Sende-/Empfangsweiche über Temperatur, wirkt sich das auch auf den Referenzpuls und damit auf den Messwert aus.

Eine weitere Möglichkeit der Referenzpulsgewinnung besteht darin, einen Teil des Signals schon wesentlich früher in der Schaltung auszukoppeln und über einen Richtkoppler in den Mischer wieder einzuspeisen. Dies erfordert aber im Allgemeinen eine Verzögerung des Sendesignals, damit die ungewollten Reflexionen von dem gezielt gewonnenen Referenzsignal sicher getrennt werden können. Allerdings weist hier die Laufzeitleitung eine relativ große Dämpfung auf, die durch einen Verstärker wieder ausgeglichen werden muss. Dies führt zu einer erhöhten Stromaufnahme des Mikrowellenmoduls.

US 2005/0264441 A1 beschreibt ein Füllstandradar mit einem Tx Pulsgenerator für den Sendepuls und einen Rx Pulsgeneratur für den Referenzpuls.

US 5,675,259 beschreibt ein Verfahren und eine Vorrichtung zur Durchflussmessung, welche ein kontinuierliches Signal aussendet, das nach Reflexion und Empfang einer Phasenauswertung unterworfen wird.

EP 1 562 051 A2 beschreibt ein Verfahren zur Füllstandmessung mit Hilfe ausgesendeter Pulse. In einer ersten Phase des Verfahrens wird ein Echoprofil erzeugt und in einer zweiten Phase des Verfahrens wird dieses Echoprofil analysiert.

EP 0 955 527 A1 beschreibt ein mit Mikrowellen arbeitendes Füllstandmessgerät mit einem Sendeimpuls-Generator und einem Referenzpuls-Generator.

US 5,898,308 beschreibt ein Verfahren und eine Vorrichtung zum Bestimmen einer dielektrischen Konstante eines Fluids auf Basis einer TDR-Messung.

WO 2007/062806 A1 beschreibt eine Schaltung zur Referenzpulserzeugung.

Es ist eine Aufgabe der vorliegenden Erfindung, eine verbesserte Referenzpulserzeugung für ein Füllstandradar anzugeben.

Diese Aufgabe wird durch eine Vorrichtung mit den in Anspruch 1 angegebenen Merkmalen gelöst. Bevorzugte Ausführungsformen ergeben sich aus den Unteransprüchen.

Gemäß der vorliegenden Erfindung ist ein Mikrowellenmodul zur unabhängigen Referenzpulserzeugung für ein Füllstandmessgerät angegeben, welches eine Echosignal-Einheit zur Bereitstellung eines Echosignals und eine Referenzpuls-Erzeugungseinheit zur Erzeugung eines Referenzpulses aufweist, wobei der Referenzpuls und das Echosignal voneinander getrennte Signale sind, und wobei die Referenzpuls-Erzeugungseinheit einen eigenen ersten Sampling-Mischer oder einen eigenen Oszillator aufweist.

Das Echosignal und der Referenzpuls sind somit voneinander unabhängige Signale, welche getrennt voneinander weiterverarbeitet werden können. Beispielsweise weist hierfür die Referenzpuls-Erzeugungseinheit einen gesonderten Sampling-Mischer auf, welcher zum Herabsetzen des Referenzsignals auf eine Zwischenfrequenz dient. In einem anderen Ausführungsbeispiel weist die Referenzpuls-Erzeugungseinheit einen gesonderten Oszillator auf, welcher alleine der Erzeugung des Referenzpulses dient. Somit ist der Referenzpuls unabhängig von Lecksignalen an der Sende-/Empfangsweiche, welche beispielsweise aufgrund mangelnder Isolation an einem Zirkulator oder Richtkoppler auftreten können.

Weiterhin ist der Referenzpuls unabhängig von Reflexionen, die zwischen Sende-/Empfangsweiche und der Antenne entstehen können. Auch ist der Referenzpuls unabhängig von großen Echos im Nahbereich, die zu Übersteuerungseffekten im Sampling-Mischer führen können. Es ist keine Verzögerungsleitung auf der Sendefrequenz des Radarsensors notwendig, die aufgrund der hohen Dämpfung einen Sendeverstärker erfordert.

Gemäß der vorliegenden Erfindung umfasst das Mikrowellenmodul weiterhin einen zweiten Sampling-Mischer in der Echosignal-Einheit und eine erste Abzapfung in der Referenzpuls-Erzeugungseinheit, wobei der zweite Sampling-Mischer zum Umsetzen eines Empfangssignals in das Echosignal in Form eines ersten ZF-Signals ausgeführt ist. Die erste Abzapfung ist zum Auskoppeln eines Referenzsignals aus einer Übertragungsstrecke für ein Sendesignal ausgeführt, wobei die Übertragungsstrecke zwischen einem ersten Oszillator und einer Antenne oder Sonde des Füllstandmessgerätes angeordnet ist. Der erste Sampling-Mischer ist zum Umsetzen des ausgekoppelten Referenzsignals in den Referenzpuls in Form eines zweiten ZF-Signals ausgeführt.

Es sind also zwei getrennte Sampling-Mischer vorgesehen. Der erste Sampling-Mischer dient dem Umsetzen des ausgekoppelten Referenzsignals und der zweite Sampling-Mischer dient dem Umsetzen des Empfangssignals.

Gemäß einem weiteren Ausführungsbeispiel der vorliegenden Erfindung umfasst das Mikrowellenmodul weiterhin eine einstellbare Dämpfung zum Variieren einer Sendeleistung des Sendesignals, wobei die einstellbare Dämpfung in der Übertragungsstrecke angeordnet ist.

Somit kann die Sendeleistung variiert werden.

Gemäß einem weiteren Ausführungsbeispiel der vorliegenden Erfindung umfasst das Mikrowellenmodul weiterhin einen Leistungsteiler zum Verteilen eines Abtastpulses auf die beiden Sampling-Mischer.

Somit ist nur ein einziger Oszillator zum Erzeugen des Abtastpulses erforderlich.

Gemäß einem weiteren Ausführungsbeispiel der vorliegenden Erfindung umfasst das Mikrowellenmodul weiterhin einen ersten Speicher zum Speichern des Echosignals und einen zweiten Speicher zum Speichern des Referenzpulses. Der erste und der zweite Speicher sind voneinander getrennt, können aber auf demselben Chip angeordnet sein.

In einem weiteren Ausführungsbeispiel umfasst das Mikrowellenmodul einen Speicher, in welchem sowohl der Referenzpuls als auch das Echosignal abgelegt werden. Beispielsweise wird das Echosignal hierfür an der Stelle des Referenzpulses ausgeblendet und durch den Referenzpuls ersetzt. Hierzu wird ein A/D-Wandler mittels eines Umschalters zuerst auf den Referenzpuls geschaltet. Nach dessen Abtastung wird der Umschalter auf das Echosignal umgeschalten. Diese Umschaltung muss noch vor Beginn des eigentlichen Messbereiches erfolgen, um keine Daten zu verlieren.

Eine andere Möglichkeit besteht darin, zwei getrennte A/D-Wandler zu verwenden, die nacheinander ihre digitalisierten Werte in einen Speicher schreiben. Der erste A/D-Wandler tastet dabei nur den Referenzpuls ab, der zweite tastet nur die Echosignale ab. Dadurch entfällt die Umschaltung der ZF-Signale.

Gemäß der vorliegenden Erfindung umfasst das Mikrowellenmodul weiterhin einen Umschalter und einen ZF-Verstärker, wobei der Umschalter zum Übertragen des Echosignals und des Referenzpulses auf den ZF-Verstärker ausgeführt ist.

Somit ist nur ein einziger ZF-Verstärker erforderlich.

Gemäß einem weiteren Ausführungsbeispiel der vorliegenden Erfindung umfasst das Mikrowellenmodul weiterhin einen ersten Verstärker zum Verstärken des Sendesignals, wobei der erste Verstärker nach der ersten Abzapfung in der Übertragungsstrecke angeordnet ist.

Dieser erste Verstärker kann zusätzlich oder alternativ zu der einstellbaren Dämpfung zwischen Filter und Richtkoppler oder zwischen Koppler und Sende-/Empfangsweiche eingesetzt werden. Dies ermöglicht eine effektive Variation der Sendeleistung, um bei gut reflektierenden Medien und/oder im Nahbereich eine Übersteuerung zu vermeiden.

Gemäß einem weiteren Ausführungsbeispiel der vorliegenden Erfindung umfasst das Mikrowellenmodul weiterhin eine zweite Abzapfung, wobei der erste Verstärker vor der ersten Abzapfung in der Übertragungsstrecke angeordnet ist und wobei die zweite Abzapfung zum Verteilen des Abtastpulses auf die beiden Sampling-Mischer ausgeführt ist.

Somit kann über die Koppeldämpfungen der beiden Richtkoppler der Referenzpuls so groß und der eigentliche Abtastpuls entsprechend klein gewählt werden, dass die Abtastung quasi umgedreht wird, also der ausgekoppelte Teil des Sendepulses den ausgekoppelten Teil des Abtastpulses abtastet.

Gemäß einem weiteren Ausführungsbeispiel der vorliegenden Erfindung umfasst das Mikrowellenmodul weiterhin einen ersten Gleichrichter zum Gleichrichten des ausgekoppelten Referenzsignals und einen zweiten Gleichrichter zum Gleichrichten des Abtastpulses, wobei beide Gleichrichter jeweils vor dem ersten Sampling-Mischer angeordnet sind.

Dies kann zu einem einfachen Aufbau des Sampling-Mischers und des ZF-Verstärkers führen.

Gemäß einem weiteren Ausführungsbeispiel der vorliegenden Erfindung sind die Gleichrichter als Detektoren ausgeführt.

Weiterhin kann, gemäß einem weiteren Ausführungsbeispiel, das Mikrowellenmodul einen zweiten Oszillator zum Erzeugen des Referenzpulses und eine Verzögerung zum Verzögern des Sendesignals auf seinem Weg zu der Antenne oder Sonde umfassen.

Echosignal und Referenzpuls sind zeitlich so weit getrennt, dass der Referenzpuls ohne Einfluss von Störungen ausgewertet werden kann.

Gemäß einem weiteren Ausführungsbeispiel der vorliegenden Erfindung ist die Verzögerung als einfache Leitung in einer Multilayer-Leiterplatte ausgeführt. Eine derartige Verzögerungsleitung lässt sich einfach herstellen.

Gemäß einem weiteren Ausführungsbeispiel der vorliegenden Erfindung sind die Abzapfungen als Richtkoppler ausgeführt.

Die Richtkoppler sind beispielsweise als symmetrischer oder als unsymmetrischer Hybridkoppler ausgeführt.

Ein solcher Hybridkoppler lässt sich kostengünstig in eine Schaltung des Mikrowellenmoduls integrieren.

Gemäß einem weiteren Ausführungsbeispiel der vorliegenden Erfindung ist ein Füllstandmessgerät zur Bestimmung eines Füllstands in einem Tank angegeben, welches ein oben beschriebenes Mikrowellenmodul umfasst.

Gemäß einem weiteren Ausführungsbeispiel der vorliegenden Erfindung ist die Verwendung eines derartigen Mikrowellenmoduls zur Füllstandmessung angegeben. Weiterhin ist ein Verfahren zur unabhängigen Referenzpulserzeugung für ein Füllstandmessgerät angegeben, bei welchem ein Echosignal bereitgestellt wird und ein Referenzpuls durch einen eigenen ersten Sampling-Mischer oder einen eigenen Oszillator erzeugt wird, wobei der Referenzpuls und das Echosignal voneinander getrennte Signale sind.

Hierdurch wird ein Verfahren bereitgestellt, durch welches Störungen des Referenzpulses effektiv verringert werden können.

Weitere Ausführungsbeispiele und Vorteile der Erfindung ergeben sich aus den Unteransprüchen.

Im Folgenden werden mit Verweis auf die Figuren bevorzugte Ausführungsbeispiele der vorliegenden Erfindung beschrieben.
Fig. 1 zeigt ein Blockschaltbild eines Mikrowellenmoduls.
Fig. 2 zeigt ein Blockschaltbild eines Mikrowellenmoduls gemäß einem Ausführungsbeispiel, das nicht Teil der vorliegenden Erfindung ist.
Fig. 3 zeigt ein Blockschaltbild eines Mikrowellenmoduls gemäß der vorliegenden Erfindung.
Fig. 3a zeigt eine schematische Darstellung einer Schaltung zur Umschaltung zwischen den beiden ZF-Signalen.
Fig. 4 zeigt ein Blockschaltbild eines Mikrowellenmoduls gemäß einem weiteren Ausführungsbeispiel der vorliegenden Erfindung.
Fig. 5 zeigt ein Blockschaltbild eines Mikrowellenmoduls gemäß einem weiteren Ausführungsbeispiel, das nicht Teil der vorliegenden Erfindung ist.
Fig. 6 zeigt ein Blockschaltbild eines Mikrowellenmoduls gemäß einem weiteren Ausführungsbeispiel, das nicht Teil der vorliegenden Erfindung ist.
Fig. 7 zeigt ein Blockschaltbild eines Mikrowellenmoduls gemäß einem weiteren Ausführungsbeispiel, das nicht Teil der vorliegenden Erfindung ist.
Fig. 8 zeigt ein Blockschaltbild eines Mikrowellenmoduls gemäß einem weiteren Ausführungsbeispiel der vorliegenden Erfindung.
Fig. 9 zeigt eine schematische Darstellung eines Füllstandradars gemäß einem Ausführungsbeispiel der vorliegenden Erfindung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

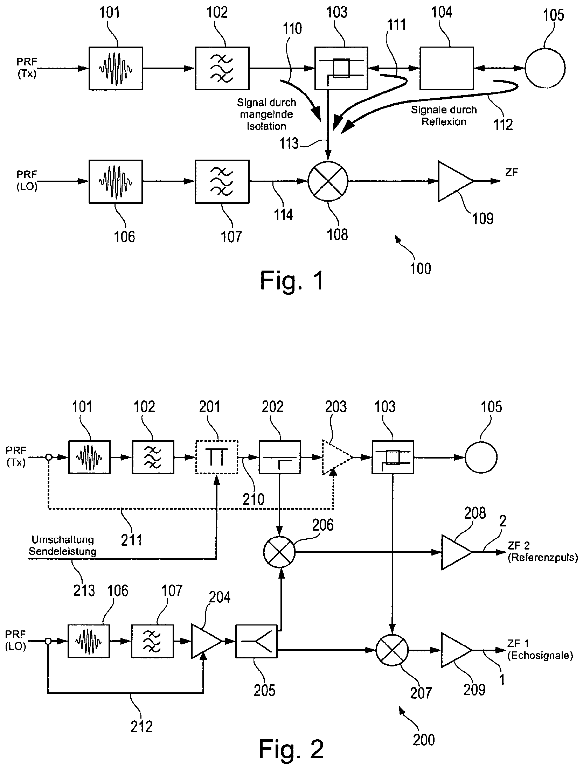

Fig. 1 zeigt ein Blockschaltbild eines Mikrowellenmoduls 100 mit den darin entstehenden Reflexionen 110, 111, 112, die zusammen den Referenzpuls ergeben. Das Mikrowellenmodul 100 umfasst einen Oszillator oder Pulsgenerator 101 zum Erzeugen eines Sendesignals, welches nachfolgend den Filter 102 durchläuft. Weiterhin ist eine Sende-/Empfangsweiche 103 vorgesehen, welche das Sendesignal durchläuft. Nachfolgend trifft das Sendesignal auf den Übergang 104 zwischen Microstrip und Koaxialleitung und dann auf die Hohlleitereinkopplung 105, die zur Antenne (nicht dargestellt in Fig. 1) führt.

Das Sendesignal wird dann von der Antenne abgestrahlt, von einem Füllgut reflektiert und wieder von der Antenne aufgenommen. Es läuft dann zur Sende-/Empfangsweiche 103 zurück und wird dann zum Mischer 108 weitergeleitet. Aufgrund mangelhafter Isolation der Sende-/Empfangsweiche 103 wird ein Signal 110 vom Sendesignal auf seinem Weg zur Antenne abgezweigt und ebenfalls zum Mischer 108 geleitet. Ebenso werden störende Reflexionen 111, 112 zum Mischer 108 geleitet.

Der Pulsgenerator 106 erzeugt einen Abtastpuls, der anschließend im Filter 107 gefiltert wird, dann ebenfalls dem Mischer 108 zugeführt wird. Im Sampling-Mischer 108 wird das Empfangssignal 113 mit dem Abtastpuls 114 in den ZF-Bereich umgesetzt und anschließend durch ZF-Verstärker 109 verstärkt.

Fig. 2 zeigt ein Blockschaltbild eines Mikrowellenmoduls 200 gemäß einem Ausführungsbeispiel, das nicht Teil der vorliegenden Erfindung ist. Das Mikrowellenmodul 200 weist hierbei insbesondere eine einstellbare Dämpfung 201, einen Richtkoppler 202, einen Verstärker 203, einen weiteren Verstärker 204, einen Leistungsteiler 205 und zwei Sampling-Mischer 206, 207 sowie einen zusätzlichen ZF-Verstärker 208 auf.

Ein im Pulsgenerator 101 erzeugter Sendepuls wird nach der Filterung im Filter 102 auf den Richtkoppler 202 gegeben. Dort wird ein Teil davon ausgekoppelt und zusammen mit dem Abtastpuls im ersten Sampling-Mischer 206 als Referenzsignal in den ZF-Bereich heruntergesetzt.

Die zusätzliche einstellbare Dämpfung 201 zwischen dem Filter 102 und dem Richtkoppler 202 oder zwischen dem Richtkoppler 202 und dem Verstärker 203 ermöglicht zudem noch die Variation der Sendeleistung, um bei gut reflektierenden Medien und/oder im Nahbereich eine Übersteuerung zu vermeiden. Die Einstellung der Dämpfung erfolgt beispielsweise durch einen Mikrocontroller über die Steuerleitung 213.

Der Abtastpuls wird ebenso wie der Sendepuls in einem Pulsgenerator 106 erzeugt und anschließend durch den Filter 107 gefiltert. Bei Bedarf kann dieses Signal noch durch Verstärker 204 verstärkt werden, bevor es ein Leistungsteiler 205 auf die beiden Sampling-Mischer 206, 207 verteilt.

Der größere Teil des Sendepulses durchläuft den Richtkoppler 202 und wird bei Bedarf in einem optional vorhandenen Verstärker 203 noch verstärkt, bevor er durch die Sende-/Empfangsweiche 203 und die Hohlleitereinkopplung 105 auf die Antenne gelangt und von dort in Richtung Füllgutoberfläche abgestrahlt wird. Das an der Füllgutoberfläche reflektierte Signal wird mit der Antenne wieder empfangen und gelangt über die Hohlleitereinkopplung 105 und die Sende-/Empfangsweiche in den Empfangszweig des Mikrowellenmoduls. Dort wird es mit dem Abtastpuls im Sampling-Mischer 207 in den ZF-Bereich umgesetzt und anschließend durch den ZF-Verstärker 209 verstärkt.

Weiterhin ist ein zusätzlicher ZF-Verstärker 208 zum Verstärken des Referenzpulses vorgesehen, der beispielsweise nach dem ersten Sampling-Mischer 206 angeordnet ist.

Durch diese Anordnung erhält man am ZF-Ausgang 1 ein Signal, welches aus Lecksignalen und Reflexionen an Übergängen und Einkopplung sowie den Füllgutechos aus dem Behälter besteht. Dieses ZF-Signal entspricht dem Signal, wie es beim Stand der Technik zu erwarten ist.

Zusätzlich erhält man am ZF-Ausgang 2 noch ein Referenzsignal, das frei von Störungen ist.

Die beiden so gewonnenen Signale werden jeweils noch einmal verstärkt (durch Verstärker 209 bzw. Verstärker 208), bevor sie beispielsweise jeweils einem A/D-Wandler zugeführt werden und beispielsweise in getrennten Speichern zur Auswertung abgelegt werden.

Alternativ dazu können die beiden ZF-Signale (Referenzpuls und Echosignal) aber auch im gleichen Speicher abgelegt werden. Dazu wird an der Stelle des Referenzpulses das ZF-Signal 1 ausgeblendet und durch den Referenzpuls ZF-Signal 2 ersetzt.

Die beiden Verstärker 203 und 204 können über die beiden Leitungen 211 und 212 eingeschaltet und ausgeschaltet werden. Im vorliegenden Fall werden sie mit dem Eingangstaktsignal (PRF) der beiden Pulsoszillatoren geschaltet und sind dadurch nur eingeschaltet, wenn auch tatsächlich ein Eingangssignal anliegt. Dadurch lässt sich der Energieverbrauch der beiden Verstärker auf ein Minimum reduzieren.

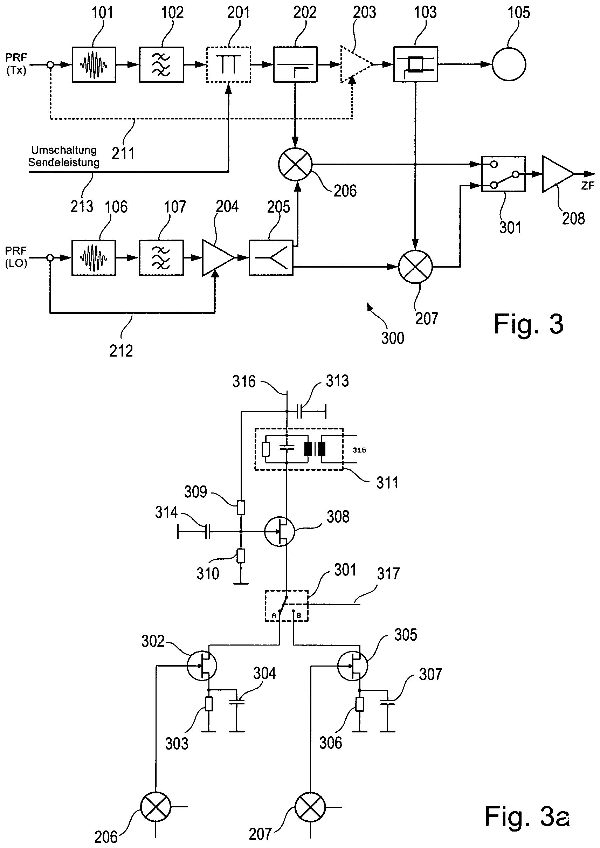

Fig. 3 zeigt ein Blockschaltbild eines Mikrowellenmoduls 300 gemäß der vorliegenden Erfindung. Das Mikrowellenmodul 300 umfasst einen Umschalter 301.

Die beiden von den Sampling-Mischern 206, 207 kommenden Signale werden über den Umschalter 301 auf einen einzigen ZF-Verstärker 208 gegeben. Der Zeitpunkt des Umschaltens hängt dabei von der weiteren Verarbeitung ab. Will man die beiden Signale getrennt weiterverarbeiten, so muss jeweils ein kompletter Abtastzyklus abgewartet werden, sollen die beiden Signale nach der A/D-Wandlung in einem gemeinsamen Speicher (nicht dargestellt in Fig. 3) abgelegt werden, so wird der Umschalter für die ZF-Signale zuerst auf den Referenzpuls und sobald dieser fertig ist, auf die Echokurve geschaltet. Dieser Umschaltpunkt muss aber noch vor dem Messbereichsbeginn liegen, um keine Informationen zu verlieren.

Durch diese Maßnahme kann sich der nachfolgende Aufwand auf einen A/D-Wandler bzw. auf eine Empfängerschaltung reduzieren.

Fig. 3a zeigt eine schematische Darstellung einer Schaltung zur Umschaltung zwischen den beiden ZF-Signalen. Da die Ausgänge der beiden Mischer sehr hochohmig und damit empfindlich gegen Störungen sind, empfiehlt es sich die Umschaltung nach einer ersten Transistorstufe vorzunehmen.

Üblicherweise werden als ZF-Verstärker sogenannte Kaskodenverstärker aus zwei Feldeffekttransistoren (FET) verwendet. Trennt man zwischen diesen beiden FETs auf und fügt dort einen Umschalter ein, so erhält man die Schaltung aus Fig. 3a.

Zum Messen des Referenzpulses schließt der Umschalter 301 über die Steuerleitung 317 zum Kontakt A und bildet somit einen Kaskodenverstärker aus den beiden Transistoren 302 und 308 zusammen mit dem Resonanzkreis 311, der für die ZF-Frequenz abgestimmt ist. Die Widerstände 303, 309 und 310 dienen zur Einstellung des Gleichstromarbeitspunktes des Verstärkers, die beiden Kondensatoren 304, 313 und 314 sind zur Abblockung von Wechselstromsignalen vorhanden.

Zur Messung der Echosignale wird der Umschalter 301 in Stellung B geschalten. Damit wird die Kaskode aus den Transistoren 305 und 308 zusammen mit dem Resonanzkreis 311 gebildet. Die Widerstände 306, 309 und 310 dienen wiederum zur Einstellung des Gleichstromarbeitspunktes des Verstärkers und die Kondensatoren 307, 313 und 314 zur Abblockung von Wechselstromsignalen.

Die Versorgungsspannung wird an 316 angeschlossen, der Ausgang 315 des Verstärkers kann dem A/D-Wandler zugeführt werden.

Die Vorteile dieser Anordnung liegen in einer wesentlich geringeren Störempfindlichkeit gegenüber einem Umschalter direkt an den beiden Mischern 206 und 207. Der Vorteil gegenüber zwei komplett getrennten Verstärkern liegt darin, dass beide Signalpfade das gleiche ZF-Filter (Resonanzkreis 311) durchlaufen und dadurch den gleichen Filterschwankungen unterliegen. Außerdem wird der Aufwand für den Filterabgleich reduziert und die Schaltung benötigt weniger Platinenfläche als zwei komplette Verstärker.

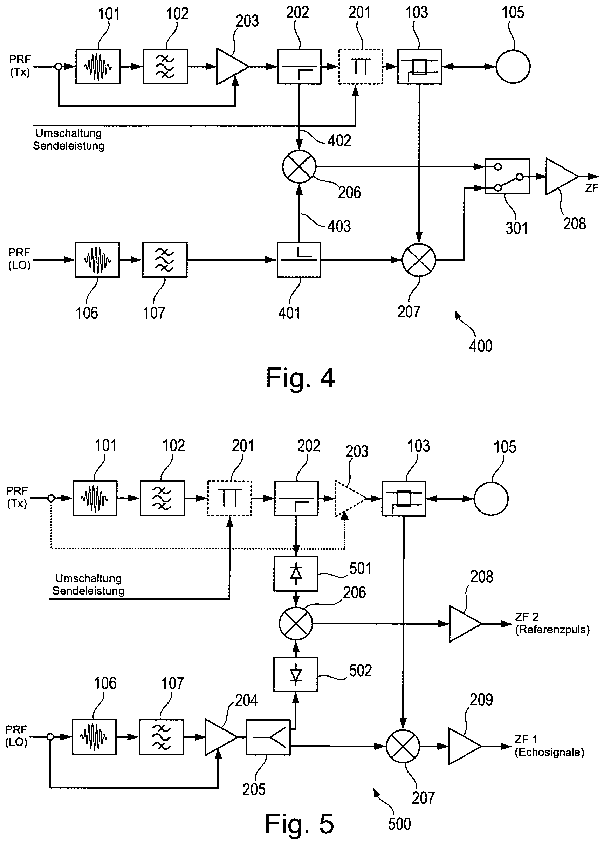

Fig. 4 zeigt eine weitere Variante eines Mikrowellenmoduls 400, bei der der Referenzpuls nach dem Sendeverstärker 203 über einen Richtkoppler 202 ausgekoppelt wird. In diesem Beispiel kann über die Koppeldämpfungen der beiden Richtkoppler 202, 401 der Referenzpuls 402 so groß und der eigentliche Abtastpuls 403 entsprechend klein gewählt werden, dass die Abtastung im übertragenen Sinne umgedreht wird, also der ausgekoppelte Teil 402 des Sendepulses den ausgekoppelten Teil 403 des Abtastpulses abtastet.

Dies bietet insofern Vorteile, da der ohnehin vorhandene Sendeverstärker 203 genügend Leistung erzeugt und somit auch das ausgekoppelte Signal 402 so viel Pegel liefert, um den ersten Sampling-Mischer 206 aufzusteuern. Ein Verstärker im Abtastzweig kann dadurch entfallen.

Diese Variante zeichnet sich durch eine besonders geringe Stromaufhahme aus, da nur ein Verstärker 203 eingesetzt wird.

Fig. 5 zeigt ein Blockschaltbild eines Mikrowellenmoduls 500 gemäß einem weiteren Ausführungsbeispiel, das nicht Teil der vorliegenden Erfindung ist. Hier besteht die Referenzpulserzeugung darin, wie in der oben gezeigten Version, einen Teil des Sendesignals auszukoppeln und anschließend mit einem Detektor 501 gleichzurichten. Dieses Signal kann dann mit einem Abtastsignal, welches mit einem zweiten Detektor 502 ebenfalls gleichgerichtet worden ist, in einem Sampling-Mischer 206 in ein zeitgedehntes Signal umgesetzt werden. Zu beachten ist hier jedoch, dass der Referenzpuls bereits als Hüllkurve vorliegt und somit nicht mehr direkt mit den Echosignalen kombiniert werden kann. Der Vorteil liegt im einfacheren Aufbau des Sampling-Mischers 206 und des ZF-Verstärkers 208.

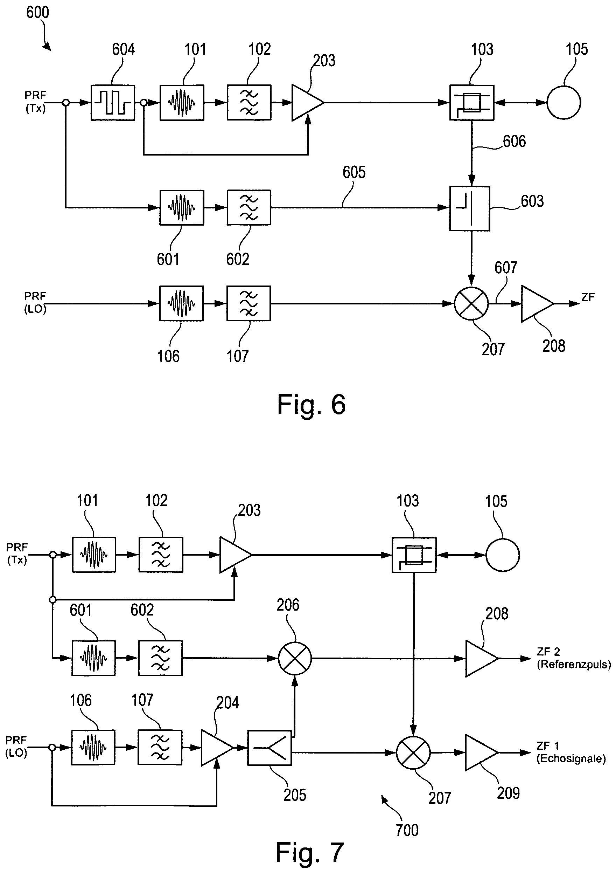

Fig. 6 zeigt ein weiteres Beispiel eines Mikrowellenmoduls 600, welches eine Verzögerungsleitung 604, einen zusätzlichen Pulsgenerator 601 mit Filter 602 und einen Richtkoppler 603 aufweist.

Der Referenzpuls wird hierbei durch die Verwendung des zweiten Mikrowellengenerators 601 erzeugt. Der in dem Pulsgenerator 601 erzeugte Referenzpuls wird in Filter 602 gefiltert und mittels des Richtkopplers 603 in den Empfänger eingespeist. Beide Mikrowellengeneratoren 101, 601 für Sende- bzw. Referenzpuls sind dabei gleich aufgebaut und werden von gleichen PRF-Signal (PRF = Pulse Repetition Rate) gesteuert. Das PRF-Signal für den Sendepulsgenerator 101 wird dabei in einer Verzögerungsleitung 604 (Delay Line) so lange verzögert, bis der Referenzpuls im Sampling-Mischer 207 abgetastet ist. Dadurch entsteht am Mischerausgang ein ZF-Signal 607, das aus dem Referenzpuls 605 und dem Echosignal 606 besteht. Beide Signale sind zeitlich so weit getrennt, dass der Referenzpuls 605 ohne Einfluss von Störungen ausgewertet werden kann.

Voraussetzung hierfür ist jedoch, dass sich beide Pulsgeneratoren 101, 601 über Zeit und Alterung gleich verhalten, was bei identischem Aufbau auch gegeben ist. Die Anforderungen an die Verzögerungsleitung 604 sind relativ gering, da die Frequenz der PRF nur im Bereich einiger MHz liegt. Dadurch kann sie beispielsweise als eine einfache Leitung in einer Multilayer-Leiterplatte aus FR4 (glasfaserverstärktes Epoxydharz) ausgeführt sein.

Fig. 7 zeigt ein Mikrowellenmodul 700 gemäß einem weiteren Ausführungsbeispiel, das nicht Teil der vorliegenden Erfindung ist.

Hierbei wird der Referenzpuls erzeugt, indem das Signal des zweiten Pulsgenerators 601 mit einem eigenen Sampling-Mischer 206 abgetastet wird und entsprechend der in Fig. 2, 3 und 4 dargestellten Weise in getrennten Kanälen oder zusammen in einem Kanal weiterverarbeitet wird.

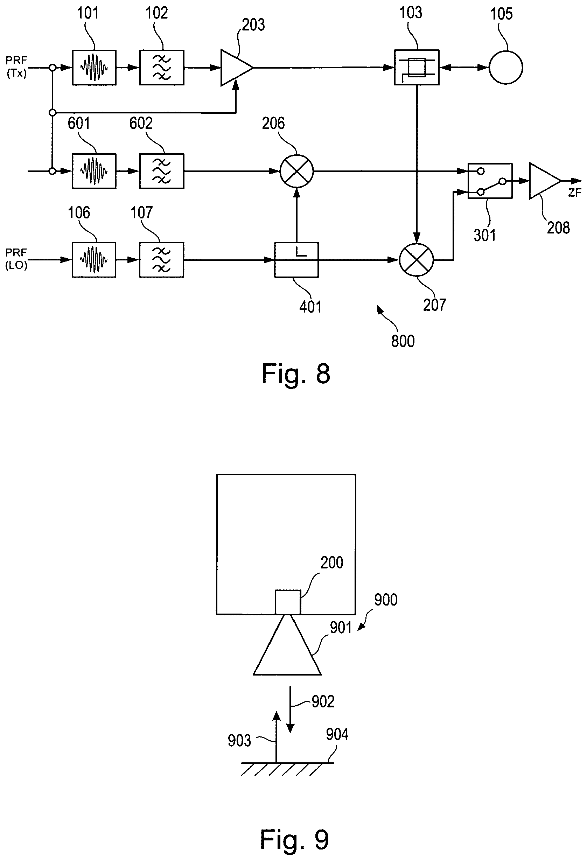

Fig. 8 zeigt ein weiteres Ausführungsbeispiel eines Mikrowellenmoduls 800, in welchem statt dem Leistungsteiler 205 (siehe Fig. 7) ein Richtkoppler 401 vorgesehen ist. Referenzpuls und Echosignal werden hierbei in einem einzelnen Kanal weiterverarbeitet.

Fig. 9 zeigt eine schematische Darstellung eines Füllstandradars gemäß einem weiteren Ausführungsbeispiel der vorliegenden Erfindung.

Das Füllstandradar 900 weist hierbei eine Antenne 901 und eines der oben beschriebenen Mikrowellenmodule, zum Beispiel Modul 200 auf. Die Antenne 901 ist zum Aussenden elektromagnetischer Strahlen 902 zu einer Füllgutoberfläche 904 und zum Empfangen auf der Füllgutoberfläche 904 reflektierter elektromagnetischer Strahlen 903 ausgeführt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Mikrowellenmodul zur unabhängigen Referenzpulserzeugung für ein Füllstandmessgerät, das Mikrowellenmodul umfassend:
eine Echosignal-Einheit zur Bereitstellung eines Echosignals in Form eines ersten ZF-Signals;
eine Referenzpuls-Erzeugungseinheit, **dadurch gekennzeichnet, dass**
die Referenzpuls-Erzeugungseinheit einen eigenen ersten Sampling-Mischer (206) aufweist, der zum Umsetzen eines Referenzsignals in einen Referenzpuls in Form eines zweiten ZF-Signals ausgeführt ist;
wobei der Referenzpuls und das Echosignal voneinander getrennte Signale sind, das Mikrowellenmodul weiterhin umfassend:
einen zweiten Sampling-Mischer (207) in der Echosignal-Einheit;
wobei der zweite Sampling-Mischer (207) zum Umsetzen eines Empfangssignals in das Echosignal in Form des ersten ZF-Signals ausgeführt ist;
eine Abzapfung (202) in der Referenzpuls-Erzeugungseinheit, wobei die Abzapfung (202) zum Auskoppeln des Referenzsignals aus einer Übertragungsstrecke (210) für ein Sendesignal zwischen einem ersten Oszillator (101) und einer Antenne oder Sonde ausgeführt ist,
**dadurch gekennzeichnet dass** das Mikrowellenmodul weiter einen Umschalter (301) und einen ZF-Verstärker (208) umfasst, wobei der Umschalter (301) zum Übertragen des Echosignals und des Referenzpulses auf den ZF-Verstärker (208) ausgeführt ist.

2. Mikrowellenmodul nach Anspruch 1, weiterhin umfassend:
eine einstellbare Dämpfung (201) zum Variieren einer Sendeleistung des Sendesignals;
wobei die einstellbare Dämpfung (201) in der Übertragungsstrecke (210) angeordnet ist.

3. Mikrowellenmodul nach einem der Ansprüche 1 bis 2, weiterhin umfassend:
einen Leistungsteiler (205) zum Verteilen eines Abtastpulses auf die beiden Sampling-Mischer (206, 207).

4. Mikrowellenmodul nach einem der vorhergehenden Ansprüche, weiterhin umfassend:
einen ersten Speicher zum Speichern des Echosignals; und
einen zweiten, vom ersten Speicher getrennten Speicher, zum Speichern des Referenzpulses.

5. Mikrowellenmodul nach einem der Ansprüche 1 bis 3,
wobei Referenzpuls und Echosignal im selben Speicher abgelegt werden;
wobei das Echosignal an der Stelle des Referenzpulses ausgeblendet wird und durch den Referenzpuls ersetzt wird.

6. Mikrowellenmodul nach Anspruch 1, weiterhin umfassend:
zwei Transistoren (302, 305) eines Kaskodenverstärkers;
wobei der Umschalter (301) zwischen den zwei Transistoren (302, 305) angeordnet ist.

7. Mikrowellenmodul nach Anspruch 3, weiterhin umfassend:
einen ersten Gleichrichter (501) zum Gleichrichten des ausgekoppelten Referenzsignals; und
einen zweiten Gleichrichter (502) zum Gleichrichten des Abtastpulses;
wobei beide Gleichrichter (501, 502) jeweils vor dem ersten Sampling-Mischer (206) angeordnet sind.

8. Mikrowellenmodul nach einem der Ansprüche 1 bis 7, weiterhin umfassend:
einen zweiten Oszillator (601) zum Erzeugen des Referenzpulses; und
eine Verzögerung (604) zum Verzögern des Sendesignals auf seinem Weg zu der Antenne oder Sonde.

9. Füllstandmessgerät zur Bestimmung eines Füllstands in einem Tank, das Füllstandmessgerät (900) umfassend:
ein Mikrowellenmodul nach einem der Ansprüche 1 bis 8.

10. Verwendung eines Mikrowellenmoduls nach einem der Ansprüche 1 bis 8 zur Füllstandmessung.

## Claims

1. Microwave module for independent reference pulse generation for a level measuring instrument, the microwave module comprising:
an echo signal unit for providing an echo signal in the form of a first IF signal;
a reference pulse generation unit, **characterized in that**
the reference pulse generation unit has its own first sampling mixer (206) which is adapted to convert a reference signal into a reference pulse in the form of a second IF signal;
wherein the reference pulse and the echo signal are separate signals, the microwave module further comprising:
a second sampling mixer (207) in the echo signal unit;
wherein the second sampling mixer (207) is adapted to convert a received signal into the echo signal in the form of the first IF signal;
a tap (202) in the reference pulse generating unit, the tap (202) being adapted to extract the reference signal from a transmission path (210) of a transmission signal between a first oscillator (101) and an antenna or probe,
**characterized in that** the microwave module further comprises a switch (301) and an IF amplifier (208), wherein the switch (301) is adapted to transmit the echo signal and the reference pulse to the IF amplifier (208).

2. Microwave module according to claim 1, further comprising
an adjustable attenuation (201) for varying a transmission power of the transmission signal;
wherein the adjustable attenuation (201) is located in the transmission path (210).

3. Microwave module according to any one of claims 1 to 2, further comprising
a power divider (205) for distributing a sampling pulse to the two sampling mixers (206, 207).

4. Microwave module according to one of the preceding claims, further comprising:
a first memory for storing the echo signal; and
a second memory, separate from the first memory, for storing the reference pulse.

5. Microwave module according to any one of claims 1 to 3,
where reference pulse and echo signal are stored in the same memory;
wherein the echo signal is blanked out at the position of the reference pulse and is replaced by the reference pulse.

6. Microwave module according to claim 1, further comprising:
two transistors (302, 305) of a cascode amplifier;
wherein the switch (301) is disposed between the two transistors (302, 305).

7. Microwave module according to claim 3, further comprising:
a first rectifier (501) for rectifying the decoupled reference signal; and
a second rectifier (502) for rectifying the sampling pulse;
wherein both rectifiers (501, 502) are respectively arranged before the first sampling mixer (206).

8. Microwave module according to any one of claims 1 to 7, further comprising:
a second oscillator (601) for generating the reference pulse; and
a delay (604) for delaying the transmitted signal on its way to the antenna or probe.

9. Level measuring device for determining a level in a tank, the level measuring device (900) comprising:
a microwave module according to any one of claims 1 to 8.

10. Use of a microwave module according to any one of claims 1 to 8 for filling level measurement.

## Revendications

1. Module à micro-ondes pour la génération indépendante d'impulsions de référence pour un appareil de mesure de niveau de remplissage, le module à micro-ondes comprenant :
une unité de signal d'écho pour fournir un signal d'écho sous la forme d'un premier signal FI ;
une unité de génération d'impulsions de référence,
**caractérisée en ce que**
l'unité de génération d'impulsions de référence présente son propre premier mélangeur d'échantillonnage (206) qui est conçu pour convertir un signal de référence en une impulsion de référence sous la forme d'un deuxième signal FI ;
dans lequel l'impulsion de référence et le signal d'écho sont des signaux séparés, le module à micro-ondes comprenant en outre :
un deuxième mélangeur d'échantillonnage (207) dans l'unité de signal d'écho ;
dans lequel le deuxième mélangeur d'échantillonnage (207) est conçu pour convertir un signal reçu en signal d'écho sous la forme du premier signal FI ;
une prise (202) dans l'unité de génération d'impulsions de référence, la prise (202) étant conçue pour extraire le signal de référence d'une voie de transmission (210) d'un signal d'émission entre un premier oscillateur (101) et une antenne ou une sonde,
**caractérisé en ce que** le module à micro-ondes comprend en outre un commutateur (301) et un amplificateur FI (208), le commutateur (301) étant conçu pour transmettre le signal d'écho et l'impulsion de référence à l'amplificateur FI (208) .

2. Module à micro-ondes selon la revendication 1, comprenant en outre :
un atténuateur réglable (201) pour faire varier une puissance d'émission du signal d'émission ;
dans lequel l'atténuateur réglable (201) est disposé dans la voie de transmission (210).

3. Module à micro-ondes selon l'une des revendications 1 à 2, comprenant en outre :
un diviseur de puissance (205) pour répartir une impulsion d'échantillonnage sur les deux mélangeurs d'échantillonnage (206, 207).

4. Module à micro-ondes selon l'une des revendications précédentes, comprenant en outre :
une première mémoire pour stocker le signal d'écho ; et
une deuxième mémoire, distincte de la première, pour stocker l'impulsion de référence.

5. Module à micro-ondes selon l'une des revendications 1 à 3, dans lequel l'impulsion de référence et le signal d'écho sont stockés dans la même mémoire ;
dans lequel le signal d'écho à la position de l'impulsion de référence est occulté et remplacé par l'impulsion de référence.

6. Module à micro-ondes selon la revendication 1, comprenant en outre :
deux transistors (302, 305) d'un amplificateur cascode ;
dans lequel le commutateur (301) est disposé entre les deux transistors (302, 305).

7. Module à micro-ondes selon la revendication 3, comprenant en outre :
un premier redresseur (501) pour redresser le signal de référence extrait ; et
un deuxième redresseur (502) pour redresser l'impulsion d'échantillonnage ;
dans lequel les deux redresseurs (501, 502) sont chaque fois disposés avant le premier mélangeur d'échantillonnage (206).

8. Module à micro-ondes selon l'une des revendications 1 à 7, comprenant en outre :
un deuxième oscillateur (601) pour générer l'impulsion de référence ; et
un élément de retard (604) pour retarder le signal d'émission sur son chemin vers l'antenne ou la sonde.

9. Appareil de mesure de niveau de remplissage pour déterminer un niveau de remplissage dans un réservoir, l'appareil de mesure de niveau de remplissage (900) comprenant :
un module à micro-ondes selon l'une des revendications 1 à 8.

10. Utilisation d'un module à micro-ondes selon l'une des revendications 1 à 8 pour mesurer un niveau de remplissage.
